# EUROPEAN PATENT APPLICATION

(11) **EP 1 793 381 A1**
(43) Date of publication of application: **06.06.2007**
(21) Application number: 05776833.5
(22) Date of filing: 01.09.2005
(51) Int. Cl.: G11B 27/10, G10L 11/00, G11B 20/10

(54) **MUSICAL COMPOSITION REPRODUCING DEVICE, MUSICAL COMPOSITION REPRODUCING METHOD AND SO FORTH**

(30) Priority: 02.09.2004 JP 2004255325
(71) Applicant: Pioneer Corporation, Tokyo 153-8654 (JP); Pioneer System Technologies Corporation, Sendai-shi, Miyagi 9810912 (JP); Tech Experts Incorporation, Tokyo 143-8564 (JP)
(72) Inventor: NONAKA, Yoshiya, Pioneer Corporation, Kawagoe-shi, Saitama, 350-8555 (JP); TARUI, Nobuo, Pioneer Corporation, Kawagoe-shi, Saitama, 350-8555 (JP); SEKINE, Yoshio, Tech Experts Incorporation, Tokyo, 143-8564 (JP); SUGINO, Ryoji, Tech Experts Incorporation, Tokyo, 143-8564 (JP); NII, Noritaka, Pioneer Corporation, Kawagoe-shi, Saitama, 350-8555 (JP); AOYAMA, Masashi, Tech Experts Incorporation, Tokyo, 143-8564 (JP); IWAJI, Hirobumi, Pioneer System Tech. Corp., Kawagoe-shi,Saitama, 350-8555 (JP); MUTOH, Takeshi, Pioneer System Tech. Corp., Kawagoe-shi, Saitama, 350-8555 (JP)
(74) Representative: Tappe, Hartmut
(86) International application number: PCT/JP2005/015996
(87) International publication number: WO 2006/025487

(57) **Abstract**

There are provided a musical composition reproducing apparatus and a musical composition reproducing method by which musical composition data can be reproduced without boring a user.

The musical composition reproducing apparatus acquires a musical composition feature value indicating respective feature of a plurality of musical composition data recorded on a recording means, judges according to the musical composition feature value of musical composition thus acquired whether or not each musical composition data has a predetermined musical mood, and registers the musical compositions judged to have the musical mood in a reproduction list corresponding to the musical mood while arranging the musical composition data in a predetermined reproducing order. The musical composition reproducing apparatus receives selection of a reproduction mode provided to change the predetermined reproduction order, rearranges all or part of the musical composition data registered on the reproduction list in a reproduction order in conformity with the reproduction mode, and reconstructs the reproduction list, thereby reproducing the musical composition data in the reproduction order thus rearranged.

## Description

### [FIELD OF THE INVENTION]

The present invention relates to a musical composition reproducing apparatus and musical composition reproducing method for reproducing musical composition data according to a reproduction list of registering musical composition data having predetermined musical mood.

### [PRIOR ART]

By an recent advance of high-capacity recording media such as HD (Hard Disc) and compression technology such as MP (MPEG Audio Layer)3 and ATRAC (Adaptive Transform Acoustic Coding) 3, a user can to employ audio equipment and personal computers, etc. to record and reproduce a lot of musical composition data, which are recorded on CDs (Compact Disc), MDs (Mini Disc), and DVDs (Digital Versatile Disc) , etc. , on a single HD and the like.

A large quantity of recorded musical composition data thus recorded are generally registered on a reproduction list and managed. In an information recording/reproducing device disclosed in Patent Document 1, musical composition data satisfying search conditions input by a user are identified, and a reproduction list of composition data associated with the search conditions is automatically compiled, whereby it is possible to easily compile the reproduction list of musical composition data of user's favor.
Patent Document 1: Japanese Unexamined Patent Publication JP-A-2004-5862

### [DISCLOSURE OF THE INVENTION]

### [PROBLEM TO BE SOLVED BY THE INVENTION]

Musical composition has a variety of musical moods including happy music, quiet music, and sad music. These musical moods can be judged by detecting feature value indicative of features of the musical composition such as beat (battuta: constant pulse signal having strong beat and weak beat) and chord (harmony or combination of harmony) progression. It is considered highly convenient if a reproduction list collecting only similar music modes (for example, happy) is compiled by judging music modes.

However, since a reproduction order of musical compositions registered on such the reproduction list is fixed (for example, reproduced in an order of reproducing from a musical composition having a higher musical mood level). Therefore, it may be expected that a user is gradually bored with reproduction of musical composition data using such the reproduction list several times.

To solve this problem, it is an object to provide a device and method for reproducing musical composition data which can prevent a user from being bored therewith.

### [MEANS FOR SOLVING PROBLEMS]

To solve the above mentioned problem, according to one aspect of the present invention, there is provided a musical composition reproducing apparatus including;
a musical composition feature value acquiring means for acquiring a musical composition feature value indicating respective feature of a plurality of musical composition data recorded on a recording means;
a musical mood judging means for judging, according to the musical composition feature value thus acquired, whether or not each of the musical composition data has a predetermined musical mood;
a reproduction list registering means for registering the musical composition data thus judged to have the musical mood on a reproduction list corresponding to the musical mood while arranging the musical composition data in a predetermined reproduction order;
a reproduction mode selection receiving means for receiving selection of a reproduction mode provided to change the predetermined reproduction order;
a reproduction list reconstructing means for rearranging all or part of the plurality of musical composition data registered on the reproduction list in the reproduction order in conformity with the reproduction mode; and
a reproduction control means for reproducing the musical composition data in the reproduction order thus rearranged.

Further, the reproduction list reconstructing means rearranges all or part of the plurality of musical composition data in an order of alternating between higher and lower musical mood levels.

Further, the reproduction list reconstructing means rearranges all or part of the musical composition data in an order of higher or lower of musical mood level.

Further, the reproduction list reconstructing means rearranges a part of musical composition data having higher musical mood level than a predetermined level out of the plurality of musical composition data registered on the reproduction list, in the reproduction order corresponding to the reproduction mode.

Further, the reproduction list reconstructing means rearranges a part of musical composition data having a lower musical mood level than a predetermined level, out of the plurality of musical composition data registered on the reproduction list, in the reproduction order in conformity with the reproduction mode.

Further, the reproduction list reconstructing means rearranges a part of musical composition data having a musical mood level of a first level or more and a second level or less, out of the plurality of musical composition data registered on the reproduction list, in the reproduction order in conformity with the reproduction mode.

Further, the reproduction list reconstructing means rearranges musical composition data except for once reproduced musical composition data, out of the plurality of musical composition data registered on the reproduction list, in the reproduction order in conformity with the reproduction mode.

To solve the above mentioned problem, according to another aspect of the present invention, it is provided to includes steps of:
acquiring a musical composition feature value indicating respective feature of a plurality of musical composition data recorded on a recording means;
judging, according to the musical composition feature value thus acquired, whether or not each of the musical composition data has a predetermined musical mood;
registering the musical composition data judged to have the musical mood on a reproduction list in conformity with the musical mood while arranging the musical composition data in a predetermined reproduction order;
receiving selection of a reproduction mode provided to change the predetermined reproduction order;
rearranging all or part of the musical composition data registered on the reproduction list in the reproduction order corresponding to the reproduction mode; and
reproducing the musical composition data in the reproduction order thus rearranged.

To solve the above-mentioned problem, according to another aspect of the present invention, it is provided to function computers to perform steps of:
acquiring a musical composition feature value indicating respective feature of a plurality of musical composition data recorded on a recording means;
judging, according to the musical composition feature value thus acquired, whether or not each of the musical composition data has a predetermined musical mood;
registering the musical composition data judged to have the musical mood on a reproduction list in conformity with the musical mood while arranging the musical composition data in a predetermined reproduction order;
receiving selection of a reproduction mode provided to change the predetermined reproduction order;
rearranging all or part of the plurality of musical composition data registered on the reproduction list in the reproduction order in conformity with the reproduction mode; and
reproducing the musical composition data in the reproduction order thus rearranged.

To solve the above mentioned problem, according to another aspect of the present invention, it is provided to record the musical reproduction processing program in a manner of enabling read-out by a computer.

### [BRIEF DESCRIPTION OF THE DRAWINGS]

FIG. 1 schematically shows a block diagram of an information reproducing/recording apparatus according to the present embodiment.
FIG. 2 is an example of a table defining a relation between a musical mood and a musical composition feature value.
FIG. 3 is a flow chart showing an example of musical composition processing system of a system control unit 17 when musical composition data are reproduced according to a reproduction list.
FIG. 4 is a diagram showing an example of action that musical composition is registered on a reproduction list and then the reproduction list is reconstructed.

### [DESCRIPTION OF NUMERICAL REFERENCES]

1: Information Reproducing/recording Apparatus
11: Information Reproducing Unit
12: Information Output Unit
13: Musical Composition Feature Value Extracting Unit
14: Information Recording/Reproducing Unit
15: Operation Unit
16: Display Unit
17: System Control Unit

### [THE BEST MODE FOR CARRYING OUT THE INVENTION]

Hereinafter, preferred embodiments of the present invention will be described with reference to accompanying drawings. In the embodiments described below, a musical composition reproducing apparatus and a method of reproducing musical composition according to the present invention are applied to an information reproducing/recording apparatus.

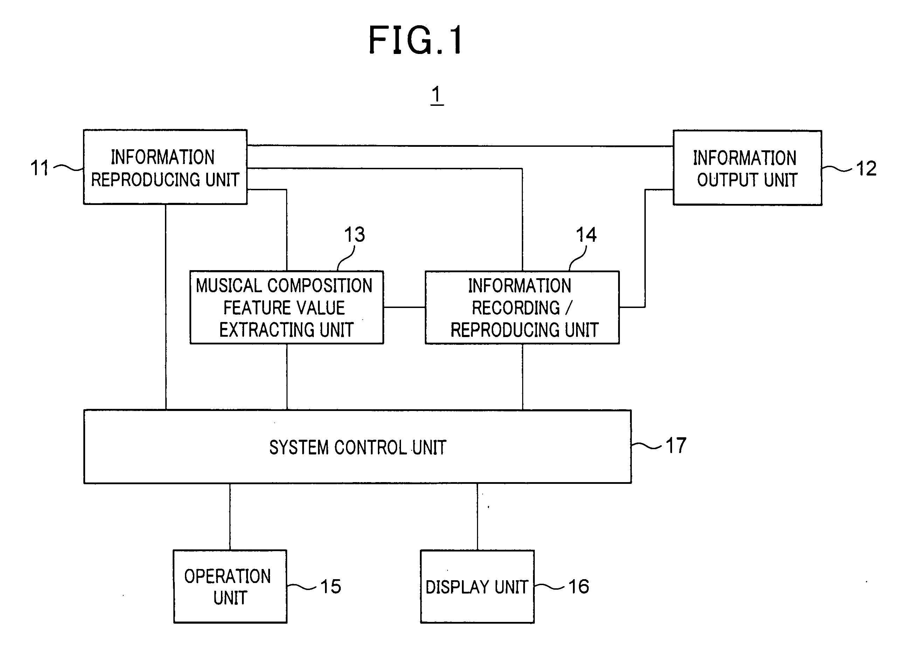

First, structure and function of an information reproducing/recording apparatus according to the present embodiment will be described with reference to FIG. 1. FIG. 1 is a block diagram schematically showing an example of information reproducing/recording apparatus according to the present embodiment.

As shown in FIG. 1, the information reproducing/recording apparatus 1 comprises an information reproducing unit 11, an information output unit 12, a musical feature value extracting unit 13, an information recording/reproducing unit 14, an operation unit 15, a display unit 16 and a system control unit 17.

Under control of the system control unit 17, the information reproducing unit 11 reproduces musical composition data recorded on recording mediums (recording means) such as magnetic tape, CD(Compact Disc: generic term of CD-DA (Digital Audio), CD-R, CD-R/W etc.), MD(Mini Disc), DVD (Digital Versatile Disc: generic term of DVD-Audio, DVD-Video, DVD-R, DVD-RW etc.), or a card type recoding medium (e. g. memory stick) , and outputs the musical composition data to an information output unit 12, a musical composition feature value extracting unit 13, and an information recording/reproducing unit 14.

For example, when the information reproducing unit 11 reproduces musical composition date recorded on CD (e.g. CD-DA) , musical composition data are reproduced and output by the information reproducing unit 11 which includes, although not shown, such as
an optical pickup for irradiating optical beam to the CD, optically reading the recorded information, photoelectrically transforming it to an electrical signal, and outputting the signal thus transformed;
an RF amplifier for generating an RF (Radio Frequency) signal from the electrical signals output from the optical pickup and outputting the signal thus generated;
a digital signal processing circuit (constructed with DSP(Digital Signal Processor) or the like) for applying to the RF signals predetermined demodulation processing and error correction processing and transforming the RF signals thus obtained to a digital signal, and reproducing the musical composition data (as for compressed musical composition data, a decode processing is performed); and
a servo circuit servo for controlling the spindle motor and the optical pickup. With regard to the configuration and the function for reproducing musical composition data from a recording medium except for CD, detailed explanation is omitted because it is a known technology. Further, musical composition data may be reproduced from multiple recording media like a multimedia player.

The information output unit 12 (not shown) receives the musical composition data (digital audio signal) reproduced and output by the information reproducing unit 11. The information output unit 12 includes, not shown, DAC (Digital-to-Analog Converter) converting these musical composition data to an analog audio signal, AMP (Amplifier) amplifying and outputting these analog audio signals, and a speaker outputting these amplified analog audio signals as sound wave, to thereby output the musical composition from the speaker.

The musical composition feature value extracting unit 13 is made up of for example DSP, inputs the musical composition data reproduced and output by the information reproducing unit 11, extracts from the musical composition data the musical composition feature value indicative of the feature of the musical composition data, and outputs it to the information recording/reproducing unit 14 and the system control unit 17.

Here, the musical composition feature value is information quantitatively showing the feature of the musical composition (for example, expressed by a numerical value between 0 and 100) and this includes musical sound feature value or the like.

The music sound feature value includes keys (tonality of music such as C major and A minor), a key change position (or a change pattern), a chord (or harmony or combination of harmonies) , a change position of the chord (or a change pattern) , a change quantity of the chord (CPM) (or change rate (HVL)), a beat (battuta: a constant pulse signal having strong and weak beat), a maximum value of the beat (a minimum value or a mean value), a change position of the beat (or a change pattern), a beat change quantity (BMP) (or change rate) , a maximum strength, a mean strength of music sound, a sound volume, and a change position of the sound volume.

Since various known methods can be applicable to extraction of these music sound feature values, detailed explanation is omitted. For example, the musical composition feature value extracting unit 13 extracts keys and values related to the keys (key change position etc.) and the chord and values related to the chord (chord change position and chord change rate etc.) in such a way that frequency is analyzed by a Fast Fourier Transformation and sound volume values with respect to each of the frequencies at predetermined time intervals along a time axis is calculated, or extracts beats and values related to the beats (a maximum value of beat signals etc. ) in such a way that a waveform envelop related to the musical composition data is detected with respect to the predetermined threshold level.

In addition to the above-mentioned musical composition feature value, the musical composition feature value extracting unit 13 may be configured to extract for example tempo and rhythm of musical composition, position and frequencies of refined portions of musical composition, and key, beat and chord of the refined portion and quantity related to these by a known method.

Under control of the system control unit 17, the information recording/reproducing unit 14, for example, compresses the musical composition data reproduced and output by the information reproducing unit 11 and records it on a recording medium (recording means) including HD, MD, CD-R/W, DVD-R/W, and a card-type recording medium, and records (stores) the musical composition feature value extracted and output by the musical composition feature value extracting unit 13, in conjunction with the musical composition data.

Further, under the control of the system control unit 17, the information recording/reproducing unit 14 reproduces musical composition data recorded in the above-mentioned recording medium (recording means), outputs them to the information output unit 12, and reads and outputs the recorded musical composition feature value to the system control unit 17. For example, when the information recording/reproducing unit 14 records musical composition data on HD, the musical composition data are recorded, reproduced and output by the information recording/reproducing unit 14 which is made up of, although not shown, a buffer memory for temporarily storing musical composition data, an encoder/decoder for encoding (for example compressing) or decoding (for example extending) the musical composition data, an HD as a recording means, and an HD drive for recording musical composition data and musical composition feature value to the HD or reproducing them from the HD. With regard to the configuration and the function for reproducing and recording the musical composition data from a recording medium (recording means) except for HD are known. Therefore, these are omitted because they.

The operation unit 15 has a plurality of operation buttons for inputting various instructions (for example, instructions to reproduce and record musical composition data, display instruction, and selection instruction) from a user. When a user presses the operation button, an instruction signal corresponding to the operation button is output to the system control unit 17.

A display unit 16 has a display panel (e.g. liquid crystal panel) for displaying information related to musical composition data, and information related to musical composition data (e. g. title and performance time) is displayed under control of the system control unit 17.

The system control unit 17 has a CPU having computing function, a working RAM for calculation, and a ROM for storing data and variety of processing programs (including a musical composition reproducing processing program: for example, the program may be downloaded from a predetermined server in internet or may be recorded on a recording medium such as CD-ROM and read out through a drive for recording medium).

Under execution of programs stored in CPU and ROM, the system control unit 17 as a computer integrally controls the information reproducing/recording apparatus 1 as a whole, and functions as means for acquiring musical composition feature value, for judging musical mood, for registering on reproduction list, for selecting and receiving reproduction mode, for reconstructing reproduction list, and for controlling reproduction.

More particularly, the system control unit 17 follows an instruction signal from the operation unit 15 to thereby control the information reproducing unit 11 or the information recording/reproducing unit 14 to reproduce the above mentioned musical data, or to thereby control the information recording /reproducing unit 14 to make it record the above mentioned musical composition data, the musical composition feature value or the like. The system control unit 17 makes the display unit 16 display various information such as reproduction list according to the instruction signal from the operation unit 15.

Further, for example when reproduction instruction according to the reproduction list is input from a user through the operation unit 15, the system control unit 17 acquires (reads) the musical composition feature value indicative of respective features of a plurality of musical composition data recorded on for example HD as a means for acquiring musical composition feature value, and judges whether respective musical composition data have musical mood (e.g. happy, hot, quiet, sad, or healing) previously selected and stored by the user, based on the above-mentioned musical composition feature value thus acquired, as a means for judging musical mood.

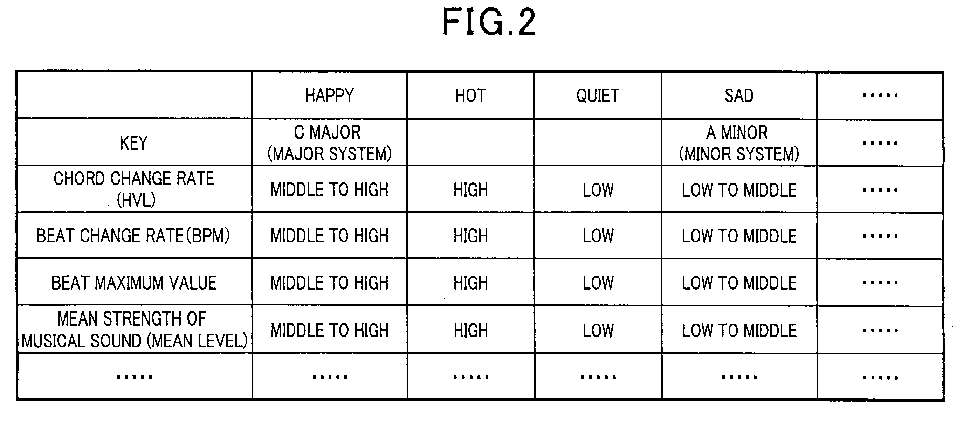

FIG. 2 is one example of table defining relations between musical mood and musical composition feature value. The system control unit 17 judges musical moods with reference to a table shown in FIG. 2. The example of Table 2 shows "happy", "hot", "quiet", and "sad" as the musical mood, and "key", "chord change rate (HVL)", "beat change rate (BPM)", "beat maximum value", and "musical sound mean strength (mean level)" as musical composition feature value. References of "high", "Middle", and "Low" denote levels of respective musical composition feature values. For example, "high" represents a numeral value range of from 80 to 100, "middle" from 30 to 79, and "low" from 0 to 29 (therefore "middle to high" denotes a range of 30 to 100 and "low to middle" 0 to 79. As an example of "key", "C major" and "A minor" are mentioned, and these are also represented by numerical value ranges respectively.

When the musical mood judgment is conducted with reference to the table of FIG.2, the musical mood is judged whether respective musical composition feature values acquired for a given musical composition data, for example, satisfy the levels of respective musical composition feature values corresponding to a predetermined musical mood shown in FIG. 2 (for example "happy" musical mood previously selected and stored by users), (in other words, whether or not within the above-mentioned numerical value range). If it is satisfied, the musical composition data are judged to have the musical mood.

Here, even though the musical mood is the same happy moods for instance, there are several levels (stages) such as "considerably happy", "ordinarily happy", "a little happy" and "slightly happy" (the levels may be further broken down). These levels are referred to as musical mood level (the same applies to happy, hot, quiet, sad, healing, etc.). The musical mood of respective musical composition data is quantified (e.g. integration value or mean value of the musical composition feature values) in comprehensive consideration of levels of respective musical composition feature values. For example in FIG. 2, with regard to "chord change rate", "beat change rate", "beat maximum value" and "mean strength of musical sound", if all levels are "high", it is regarded as "considerably happy" (high musical mood level). If three levels are "high" and the others are "middle", it is regarded as "ordinarily happy". If two levels are "high" and the others are "middle", regarded as "a little happy". If all levels are "middle", regarded as "slightly happy" (musical mood level is low).

As a reproduction list registering means, the system control unit 17 registers a plurality of musical composition data judged as having the musical mood in a reproduction list corresponding to the musical mood list (or generate a new reproduction list corresponding to the musical mood), while arranging the data in predetermined reproduction order (for example, in descending or ascending order of high and low musical mood level, or in registration order), (musical composition data registered on the reproduction list are for example temporarily stored in buffer memory in the information recording/reproducing unit 14). As a reproduction controlling means, the system control unit 17 reproduces a plurality of musical composition data in reproduction order of musical composition data registered on the reproduction list.

Further, when a user selects a reproduction mode for changing the above-mentioned predetermined reproduction order through the operation unit 15 for example, the system control unit 17 receives this selection as a reproduction mode selection receiving means, entirely or partially rearranges a plurality of musical composition data registered on the above-mentioned reproduction list in a reproduction order corresponding to a reproduction mode related to the above-mentioned selection to thereby reconstruct the reproduction list as a reproduction list reconstructing means, and reproduces the musical composition data in a rearranged reproduction order as a reproduction controlling means.

Here, the above-mentioned reproduction mode (reproduction pattern) includes various reproduction modes such as "alternating reproduction of high and low musical mood level (or score)", "musical composition reproduction of a little high (e.g. a little happy) musical mood", "musical composition reproduction of considerably high (e.g. considerably happy) musical mood level. A user selects the reproduction mode according to an occasional mood (for example, select "alternating reproduction of high and low musical moods" when they wish to change the mood).

For example, partial musical composition data with higher musical mood level than the predetermined level (e.g. 300 integration value of musical composition feature value) or lower musical mood level than the predetermined musical composition value (e.g. 100 integration value of musical composition feature value) may be configured to select out of a plurality of musical composition data registered on a single reproduction list. Or partial musical composition data may be selected within a range of musical mood level higher than Level 1 (e.g. 100 integration value of musical composition feature value) and lower than Level 2 (e.g. 300 integration value of musical composition feature value) . Or musical composition data except for once reproduced musical composition data may be selected, the above-mentioned plurality of musical composition data are alternately rearranged in descending order and ascending order of musical mood level, or rearranged in descending order or the ascending order of musical mood level.

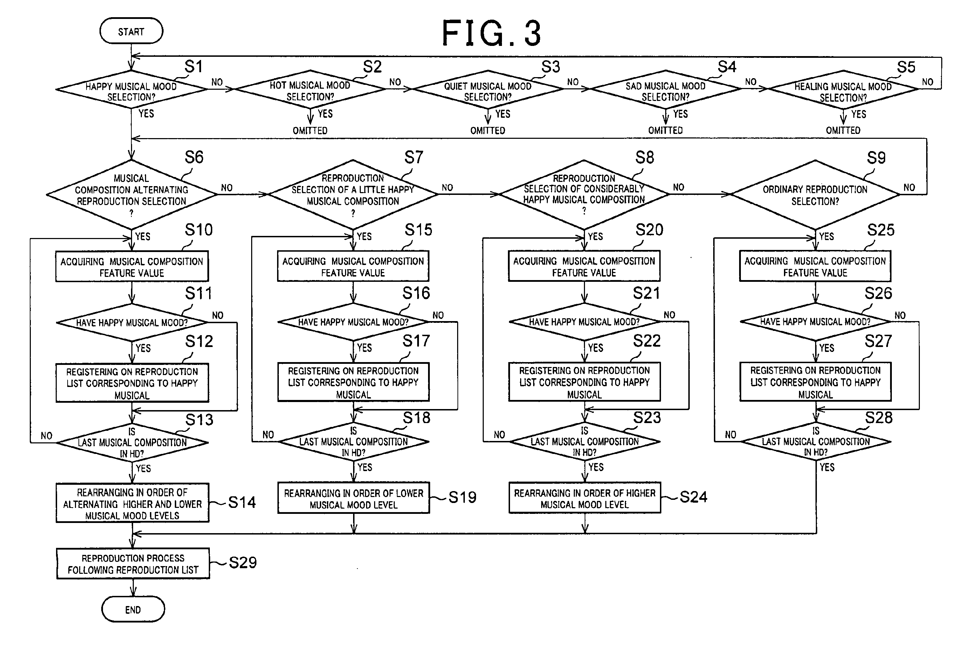

Next, an operation example of the information reproducing/recording apparatus 1 will be described with reference to FIG. 3.

FIG. 3 is a flow chart showing an example of musical composition reproduction process of the system control unit 17 when the musical composition data are reproduced according to the reproduction list.

First, when a user operates the operation unit 15 to input "reproduction instruction according to reproduction list", a musical composition reproduction process shown in FIG. 3 starts. The system controlling 17 displays information to prompt to select musical mood (e.g. musical mood list) on a display unit 16 and waits for a musical mood selection by a user(Steps S1 to S5).

On the contrary thereto, when the user operates the operation unit 15 to select a desired musical mood, e. g. "happy" musical mood, the system control unit 17 subsequently displays information to prompt selection of the reproduction mode (e.g. reproduction mode list) on the display unit 16 and waits for reproduction mode selection by the user (Steps S6 to S9). In the example of FIG.3, "alternating reproduction of musical composition", "reproduction of a little happy musical composition", "reproduction of considerably happy musical composition", and "ordinary reproduction" are displayed as reproduction modes.

Processes in the case of musical mood selection of "hot", "quiet", "sad", and "healing" are omitted from FIG. 3 because these are basically the same as those of "happy" musical mood selection (Steps S6 to S29) (for example, "happy" is replaced with "hot" in the drawing).

Next, when the user operates the operation unit 15 to select a desired reproduction mode, e.g. "alternating reproduction of musical composition", the system control unit 17 follows this (Step S6:Y) to select a single musical composition data from a plurality of musical composition data recorded on for example HD, acquires (reads) a feature value of the musical composition data from for example an HD through the information recording/reproducing unit 14 (Step S10), and judges whether the selected musical data have for example happy musical mood or not based on the acquired musical composition feature value (Step S11). When they have a happy musical mood (Step S11:Y), the system control unit 17 registers the selected musical composition data on the reproduction list corresponding to the happy musical mood (Step S12) and proceeds to Step S13. On the other hand, when the selected musical composition data have no happy musical mood (Step S11: N), the process proceeds to Step 13 without registering the musical composition data on the reproduction list.

In Step S13, it is judged whether or not the musical composition data is the last data on the HD (or the other musical composition data but the mentioned musical composition data are recorded on the HD). When the musical composition data are not the last one on the HD (Step S13: N), another musical composition data are selected, the process returns to Step 10, and similar processes to the above-mentioned processes are repeated. In this way, musical composition data are registered on the reproduction list, for example, in descending order of musical mood level.

On the other hand, when the musical composition data are the last one on the HD (Step S13: Y), the system control unit 17 selects the musical composition data out of a plurality of musical composition data recorded on the above mentioned list (for example all musical composition data on the reproduction list) according to the above mentioned selected reproduction mode, or "alternating reproduction of musical composition", and rearranges a plurality of the selected musical composition data in reproduction order corresponding to the mentioned "alternating reproduction of musical composition", or alternatively rearranges in descending order and ascending order to thereby reconstruct the reproduction list (Step S14) .

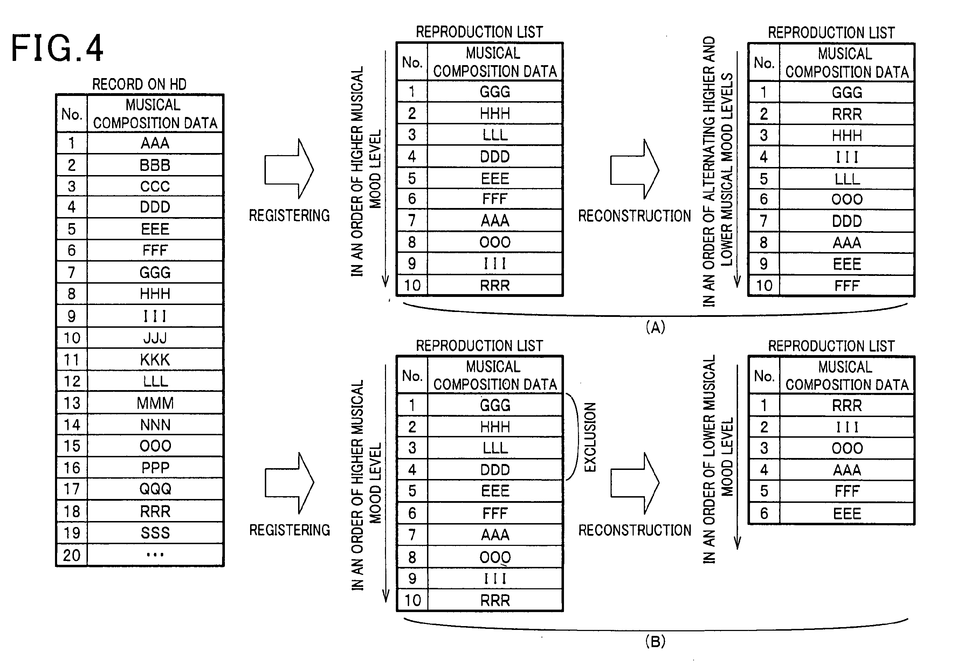

FIG. 4 is a diagram showing an example in which musical composition is registered on a reproduction list and then the reproduction list is reconstructed. In the example of FIG. 4 (A), after musical composition data having happy musical mood from a plurality of musical composition data recorded on HD are registered on the reproduction list, all of those musical data are selected and arranged in descending order and ascending order.

Meanwhile, in a case where "reproduction of a little happy musical composition" is selected" in Step S7, the system control unit 17 proceeds Steps S15 to S18 (similar to Steps S10 to S13) after selecting a single musical composition data from a plurality of musical composition data recorded on e.g. HD, musical composition data corresponding to "reproduction of a little happy musical mood" are selected in Step 19 (for example, musical composition data having a lower level than a predetermined level on the reproduction list are selected (or musical composition data having high musical mood level (score) are deleted)) , a plurality of these selected musical data are rearranged in reproduction order corresponding to "reproduction of a little happy musical composition", for example, in ascending order as shown in FIG. 4(B) order of musical mood level, and the reproduction list is reconstructed.

Meanwhile, in a case where "reproduction of considerably happy musical composition" is selected in Step S8, the system control unit 17 proceeds to Steps S20 to S23 (similar to Steps S10 to S13) after selecting a single musical composition data from a plurality of musical composition date recorded on e.g. HD, musical composition data corresponding to "reproduction of considerably happy musical composition" are selected in Step 24 (for example, musical composition data having higher musical mood level than the predetermined level on the reproduction list are selected (or musical composition data having low musical mood level (score) are deleted)), a plurality of these selected musical data are rearranged in reproduction order corresponding to "reproduction of considerably happy musical composition", for example, in descending order of musical mood level, and the reproduction list is reconstructed.

In a case where "ordinary reproduction" is selected in Step S9, the system control unit 17 performs Steps S25 to S28 (similar to Steps S10 to S13) after selecting a single composition data from a plurality of musical composition data. In this case, it proceeds to Step S29 without reproducing a reproduction list.

In Step S29, the system control unit 17 reproduces a plurality of the selected musical composition data according to the above mentioned reproduction list (in the above mentioned rearranged reproduction order except for "ordinary reproduction")(reproduction control). Thus musical composition data starts being reproduced by the information recording/reproducing unit 14 (starts playing), and is output externally as sound waves through the information output unit 12. As for the above-mentioned reproduction list, it may be configured to be read and used after being recorded on HD and stored. Or it may be deleted after musical composition data are registered on a reproduction list and all the data are reproduced.

As described above, according to the above-mentioned embodiment, a reproduction list is reconstructed according to reproduction mode selected by users (for example, an reproduction order of musical composition data is rearranged), after musical composition data are registered on the reproduction lists corresponding to respective melodies, thereby preventing musical composition data from monotonous reproduction so that users can reproduce musical composition data without getting bored.

In the above-mentioned embodiment, the musical mood level (score) of musical composition data may be configured to subtract (or add) by predetermined value, every time the musical composition data registered on the above mentioned reproduction list are reproduced. In this configuration, the appropriate musical composition data can be excluded from selection, when some of musical composition data, for example, having a higher musical mood level than predetermined level (or lower level for addition) are selected from a plurality of musical composition data registered on a single reproduction list.

Further, in the above-mentioned embodiment, although musical composition reproducing apparatus of the present invention is applied to the information reproducing/recording apparatus, it is not limited to this. For example, in the information reproducing/recording system including an information reproducing device and an information recording device which are connected with a cable for exclusive use, it is applicable to either one of the information reproduction device and the information recording device. The musical composition reproducing apparatus according to the present invention is also applicable to audio equipment for personal computers and PDAs as well as cars, household use, and portable use, and further applicable to in-car navigation systems.

Furthermore, the present invention is not limited to the above-mentioned embodiment. The above mentioned embodiment is exemplification and any one of those having the configuration and the effect substantially similar to the technical concept described in claims of the present invention is included in the technical scope of the present invention.

All disclosure of Japanese Patent Application (No. 2004-255325) including the specification, claims, drawings, and abstract filed on September 2, 2004 shall be incorporated here by reference to all of them.

## Claims

1. A musical composition reproducing apparatus comprising:
a musical composition feature value acquiring means for acquiring a musical composition feature value indicating respective feature of a plurality of musical composition data recorded on a recording means;
a musical mood judging means for judging according to the acquired musical composition feature value whether or not each of the musical composition data has a predetermined musical mood;
a reproduction list registering means for registering the musical composition data judged to have the musical mood on a reproduction list corresponding to the musical mood while arranging the musical composition data in a predetermined reproduction order;
a reproduction mode selection receiving means for receiving selection of a reproduction mode provided to change the predetermined reproduction order;
a reproduction list reconstructing means for rearranging all or part of a plurality of musical composition data registered on the reproduction list in the reproduction order in conformity with the reproduction mode; and
a reproduction control means for reproducing the musical composition data in the reproduction order thus rearranged.

2. The musical composition reproducing apparatus according to claim 1, wherein
the reproduction list reconstructing means rearranges all or part of the plurality of musical composition data in an order of alternating between higher and lower musical mood levels.

3. The musical composition reproducing apparatus according to claim 1, wherein
the reproduction list reconstructing means rearranges all or part of the plurality of musical composition data in an order of higher or lower of musical mood level.

4. The musical composition reproducing apparatus according to any one of claim 1 to 3, wherein
the reproduction list reconstructing means rearranges a part of musical composition data having a higher musical mood level than a predetermined level, out of the plurality of musical composition data registered on the reproduction list, in the reproduction order in conformity with the reproduction mode.

5. The musical composition reproducing apparatus according to any one of Claims 1 to 3, wherein
the reproduction list reconstructing means rearranges a part of musical composition data having a lower musical mood level than a predetermined level, out of the plurality of musical composition data registered on the reproduction list, in the reproduction order in conformity with the reproduction mode.

6. The musical composition reproducing apparatus according to any one of claims 1 to 3, wherein
the reproduction list reconstructing means rearranges a part of musical composition data having a musical mood level of a first level or more and a second level or less, out of the plurality of musical composition data registered on the reproduction list, in the reproduction order in conformity with the reproduction mode.

7. The musical composition reproducing apparatus according to any one of claims 1 to 3, wherein
the reproduction list reconstructing means rearranges musical composition data except for once reproduced musical composition data, out of the plurality of musical composition data registered on the reproduction list, in the reproduction order in conformity with the reproduction mode.

8. A method for reproducing musical composition data comprising steps of:
acquiring a musical composition feature value indicating respective feature of a plurality of musical composition data recorded on a recording means;
judging according to the musical composition feature value thus acquired whether or not each of the musical composition data has a predetermined musical mood;
registering the musical composition data judged to have the musical mood on a reproduction list in conformity with the musical mood while arranging the musical composition data in a predetermined reproduction order;
receiving selection of a reproduction mode provided to change the predetermined reproduction order;
rearranging all or part of the musical composition data registered on the reproduction list in the reproduction order corresponding to the reproduction mode; and
reproducing the musical composition data in the reproduction order thus rearranged.

9. A musical composition reproduction processing program causing a computer to function steps of:
acquiring a musical composition feature value indicating respective feature of a plurality of musical composition data recorded on a recording means;
judging according to the acquired musical composition feature value whether or not each of the musical composition data has a predetermined musical mood;
registering the musical composition data judged to have the musical mood on a reproduction list in conformity with the musical mood while arranging the musical composition data in a predetermined reproduction order;
receiving selection of a reproduction mode provided to change the predetermined reproduction order;
rearranging all or part of the plurality of musical composition data registered on the reproduction list in the reproduction order in conformity with the reproduction mode; and
reproducing the musical composition data in the reproduction order thus rearranged.

10. A recording means wherein
the musical reproduction processing program according to claim 9 is recorded in it so as to be readable.
